(19) **Europäisches Patentamt European Patent Office Office européen des brevets**

(11) **EP 3 677 709 B1**

(12) **EUROPEAN PATENT SPECIFICATION**

(45) Date of publication and mention of the grant of the patent:
**04.09.2024 Bulletin 2024/36**

(21) Application number: **18852257.7**

(22) Date of filing: **09.08.2018**

(51) International Patent Classification (IPC):
**D01F 6/62** *(2006.01)*        **C08G 63/80** *(2006.01)*
**D01D 5/16** *(2006.01)*

(52) Cooperative Patent Classification (CPC):
**D01D 5/16; C08G 63/80; D01F 6/62**

(86) International application number:
**PCT/JP2018/029929**

(87) International publication number:
**WO 2019/044449 (07.03.2019 Gazette 2019/10)**

(54) **SINGLE COMPONENT POLYESTER MONOFILAMENT FOR SUPERFINE HIGH-MESH FILTER**

EINKOMPONENTIGES POLYESTERMONOFILAMENT FÜR SUPERFEINEN FILTER MIT HOHEM NETZANTEIL

MONOFILAMENT DE POLYESTER À COMPOSANT UNIQUE POUR FILTRE À MAILLE ÉLEVÉE SUPERFIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2017   JP 2017165843**

(43) Date of publication of application:
**08.07.2020   Bulletin 2020/28**

(73) Proprietor: **Toray Industries, Inc.**
**Tokyo 103-8666 (JP)**

(72) Inventors:
• **SASAGAWA, Hisashi**
  **Mishima-shi**
  **Shizuoka 411-8652 (JP)**

• **TOYAMA, Atsushi**
  **Mishima-shi**
  **Shizuoka 411-8652 (JP)**
• **MARUYAMA, Hiroshi**
  **Mishima-shi**
  **Shizuoka 411-8652 (JP)**
• **FUJIMORI, Minoru**
  **Nomi-shi**
  **Ishikawa 923-1294 (JP)**

(74) Representative: **Kador & Partner Part mbB**
**Corneliusstraße 15**
**80469 München (DE)**

(56) References cited:
**WO-A1-2016/052269        JP-A- 2005 194 669**
**JP-A- 2008 101 287        JP-A- 2008 101 288**
**JP-A- 2011 021 296        JP-A- 2011 021 296**

**Description**

TECHNICAL FIELD

The present invention relates to a fine-size single component high-strength polyester monofilament for a superfine high-mesh filter. More specifically, the present invention relates to a monofilament suitable for producing high-mesh and high-modulus screen gauze, such as an acoustic filter and a fuel filter, which is required to have both filtration performance and permeation performance at a high level.

BACKGROUND ART

In recent years, in the field of electronics that is growing rapidly, gauze woven fabrics made of monofilament yarns woven together, which are called screen gauze, have been used not only in screen printing mesh cloth for printed circuit boards but also in shaping filters used in automobiles, home appliances, and the like. Specific applications of gauze woven fabrics made of monofilament yarns woven together include, as for screen printing applications, T-shirts and banners, signboards, vending machine plates, car panels, outdoor/indoor signs, ballpoint pens, various cards, nameplates, scratch-offs, Braille, CDs and DVDs, printed boards, plasma displays, and liquid crystal displays. As for filter applications, specific applications of gauze woven fabrics include: lint filters for preventing re-adhesion of lint in washing water; filters installed in air conditioners and intended for removing dust and dirt in the room; shaping filters installed in vacuum cleaners and intended for removing dust, dirt, and rubbish; in the medical field, filters for blood transfusion kits and artificial dialysis circuits and intended for removing air bubbles and the like; and in the automobile field, filters for fuel flow paths such as fuel pumps and fuel injection devices, and filters for ABSs, brakes, transmissions, power steering, and the like. Furthermore, also in hydraulic circuits for anti-skid devices as well as for VVT mechanisms that are the latest mechanism for improving the fuel economy and increasing the output, the gauze woven fabrics play an important role of preventing contamination of a solenoid valve with rubbish or foreign matters and of filtering off and removing rubbish or foreign matters.

In particular, in the fields of electronics and automobiles that are growing rapidly in recent years, filters are becoming increasingly superfine. For example, acoustic filters are miniaturized with the miniaturization of mobile terminals, and are required to have both dustproof performance and acoustic permeability at a high level. Therefore, the mesh of acoustic filters has been reduced in the wire diameter and increased in the mesh count while maintaining the mesh opening uniformity of the filter. Therefore, it is necessary to reduce the fineness of the monofilament while maintaining high strength, high modulus, and fiber diameter uniformity in the longitudinal direction of the monofilament.

In designing a high-strength and high-modulus monofilament, the orientation and crystallization proceeds at the fiber surface as the strength and modulus are increased. Accordingly, part of the fiber surface is scraped off due to being rubbed with a weaving reed or the like, and whisker-like cake, that is, so-called scratch fluff is likely to be produced. The scratch fluff, even in a small amount, may cause a serious defect of mesh clogging in a superfine high-mesh woven fabric. In addition, since the fiber surface is scraped, the fiber diameter uniformity is deteriorated, and the acoustic permeation performance and filtration performance are deteriorated. Therefore, Patent Document 1 (Japanese Patent Laid-open Publication No. 2013-194330) proposes to suppress the orientation and crystallization at the fiber surface even in a high-strength and high-modulus monofilament by increasing the intrinsic viscosity of the polyester.

Patent Document 2 (JP2008101288A 2008-05-01) discloses a polyester monofilament for screen gauze of high mesh screens, which has a pre-set value of base-thread maximum point strength, strength, maximum point elongation and wet-heat shrinkage percentage before and after wet-heat treatment.

Patent Document 3 (JP5217059B2 2013-06-19) discloses a polyester monofilament used for high-modulus screen gauzes, containing a polyethylene-terephthalate composition comprising a specified amount of a phosphorus compound.

As for the design of a monofilament having a uniform fiber diameter in the longitudinal direction, production of nodes on the surface of the monofilament should be prevented as much as possible. This is because the nodes may cause yarn breakage or generation of scum during weaving, and may lead to lower filter performance in high-mesh woven fabrics. One cause of the production of nodes is a gel that results from an increase in the molecular weight of a polymer itself. Therefore, Patent Document 2 (Japanese Patent Laid-open Publication No. 2012-117196) proposes to suppress the thermal decomposition of the polymer by reducing the curve of the polymer liquid supply pipe and reducing the time from the introduction of the polymer into the pack until the polymer is discharged to 1 minute or less, thereby reducing the amount of heat received by the polymer as much as possible. Moreover, Patent Document 3 (Japanese Patent Laid-open Publication No. 2014-118574) focuses on hydrolysis of an ester bond in a polyester and thermal decomposition of the polyester at a high temperature, and proposes to suppress the contribution of a catalyst metal to the thermal decomposition and to impart hydrolysis resistance and heat resistance to the polyester by copolymerizing a disilanol compound having a specific structure.

PRIOR ART DOCUMENTS

PATENT DOCUMENTS

Patent Document 1: Japanese Patent Laid-open Publication No. 2013-194330
Patent Document 2: Japanese Patent Laid-open Publication No. 2012-117196
Patent Document 3: Japanese Patent Laid-open Publication No. 2014-118574

SUMMARY OF THE INVENTION

PROBLEMS TO BE SOLVED BY THE INVENTION

In order to reduce the fineness of a monofilament having high strength, high modulus, and a uniform fiber diameter in the longitudinal direction, it is important to reduce large nodes. Since the reduction of the fineness reduces the amount of the polymer to be melt-spun, the residence time of the polymer in the liquid supply pipe is prolonged. As a result, the polymer receives a large amount of heat, and the degradation of the polymer itself is promoted. In addition, since a polymer having a high intrinsic viscosity is melt-spun, the polymer is likely to abnormally stagnate due to the high viscosity. Specifically, the amount of heat received by the polymer increases, and the degradation of the molten polymer tends to be promoted. Furthermore, since the ratio of the size of the degraded gel to the fiber diameter relatively increases with the reduction of the fineness, it is expected that a fine gel that has been insignificant will become apparent as a node. Accordingly, it is imagined that the fine-size monofilament tends to have large nodes, and may cause yarn breakage or scum when subjected to warping or weaving. For superfine high-mesh filter applications, it is important to reduce the number of fine nodes. When a monofilament having nodes is woven, the yarn path in the direction perpendicular to the nodes is long because the nodes have a diameter larger than the fiber diameter. Therefore, the mesh opening between a node and a monofilament yarn horizontally adjacent to the node is wide, and the mesh opening between nearby monofilament yarns that are not adjacent to a node is narrow. As a result, a filter made of the monofilament may pass coarse materials or cause clogging. In particular, a high-mesh woven fabric has a narrow mesh opening, and is largely varied in the mesh opening even with fine nodes. Therefore, when the high-mesh woven fabric has a large number of fine nodes, the filter has lower filtration accuracy. Therefore, in order to produce a fine-size monofilament having high strength, high modulus, and a uniform fiber diameter in the longitudinal direction for use in superfine high-mesh filters, it is necessary to suppress the degradation of the polymer itself to suppress the production of a fine gel and coarsening of the gel, thereby reducing the diameter of nodes and the number of nodes including those of fine nodes.

An object of the present invention is to provide a polyester monofilament suitable for a mesh woven fabric used as a filter. In particular, the object is to provide a monofilament suitable for producing a high-mesh and high-modulus woven fabric that has a small diameter of nodes and a small number of nodes to have high mesh opening uniformity, and that is required to have both filtration performance and permeation performance of a filter at a high level.

SOLUTIONS TO THE PROBLEMS

In order to achieve the above-mentioned object, the present invention provides a single component polyester monofilament for a superfine high-mesh filter according to claim 1.

EFFECTS OF THE INVENTION

The monofilament according to the present invention can provide a filter that has no node defects, has high monofilament uniformity, and has high quality for both filterability and permeability.

BRIEF DESCRIPTION OF THE DRAWING

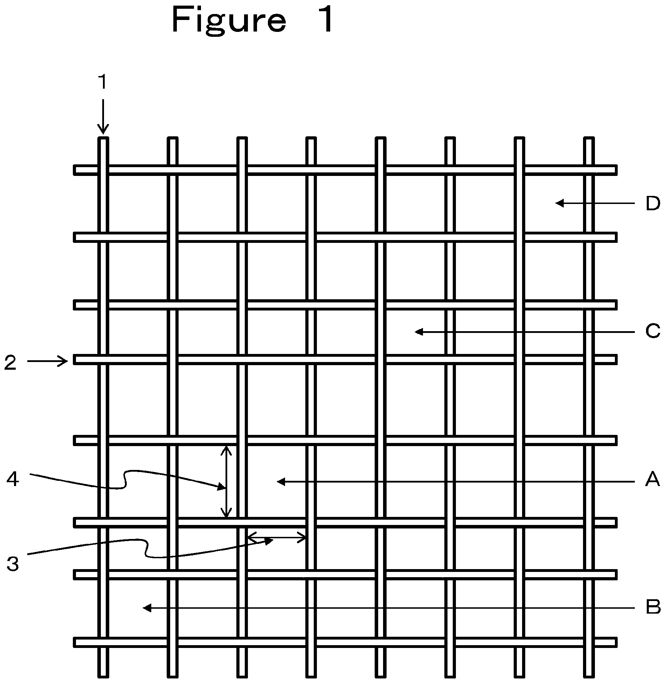

Fig. 1 is a diagram illustrating a method for measuring the areas of mesh openings.

EMBODIMENTS OF THE INVENTION

Since a high-mesh woven fabric has a short mesh opening interval, it is necessary to reduce the diameter of nodes and reduce the number of nodes. In general, the number of nodes is obtained by passing a monofilament through a slit guide having a size of fiber diameter × 1.1 times, and counting the number of times the yarn is broken as the number of nodes. The present inventors intensively studied to achieve a higher degree of fiber diameter uniformity, and as a result, found that when the diameter of nodes and the number of nodes are within specific ranges, a gray fabric made of the monofilament has a small variation in the mesh opening, and the monofilament can have both filtration performance and permeation performance of a filter at a high level. That is, in the single component polyester monofilament for a superfine high-mesh filter according to the present invention, it is necessary that as for nodes having a diameter larger by 2 um or more than the fiber diameter, the nodes being present in 1 million m in the fiber longitudinal direction of the single component polyester monofilament, the total (%) of increase rates of the diameters from the fiber diameter satisfy formula (1):

[Math. 1]

$$\sum_{n=1}^{k} \left( \frac{x_n - x'}{x'} \right) \times 100 \ \leq \ 10000 \qquad (1)$$

wherein $x_n$ is the node diameter, x' is the fiber diameter, and k is the number of nodes included in 1 million m in the fiber longitudinal direction;

The left-hand side of formula (1) indicates the increase rate of the node diameter $x_n$ from the fiber diameter x'. When the monofilament has a large node, the value on the left-hand side of formula (1) increases. In addition, the left-hand side of formula (1) is the sum of the increase rates of diameters $x_n$ of nodes having a diameter larger by 2 $\mu$m or more than the fiber diameter, the nodes being present in 1 million m in the fiber longitudinal direction. When there are a large number of nodes having a diameter larger by 2 um or more than the fiber diameter, the value on the left-hand side of formula (1) increases. More specifically, it is important that the diameter of nodes be small and the number of nodes be also small. In the monofilament according to the present invention, when the value of the left-hand side of formula (1) is 10,000 or less, the monofilament has high uniformity, a gray fabric made of the monofilament has a small variation in the mesh opening, and the monofilament can provide a filter that has high quality for both filterability and permeability. The value of the left-hand side of formula (1) is more preferably 9,000 or less, still more preferably 8,000 or less.

The monofilament according to the present invention for use in a superfine high-mesh filter needs to have a fineness of 3.0 to 8 .0 dtex. The fineness is preferably 3.0 to 6.0 dtex. The monofilament according to the present invention needs to have a strength of 5.0 to 6.5 cN/dtex and a strength at 5% elongation of 2.7 to 3.3 cN/dtex to suppress deterioration of the weaving performance, and deterioration of the dimensional stability when the monofilament is used in a filter. If the strength is less than 5.0 cN/dtex, the strength of the filter is insufficient, misalignment is likely to occur, and deterioration of the filtration performance or breakage is likely to occur. If the strength exceeds 6.5 cN/dtex, the monofilament is scraped with a reed during weaving, and the scraped part is woven into a woven fabric to be a defect. The strength is preferably 5.0 to 6.0 cN/dtex. If the strength at 5% elongation is less than 2.7 cN/dtex, the dimensional stability of the filter is deteriorated, misalignment is likely to occur, the filtration performance is deteriorated, and partial clogging is likely to occur. If the strength at 5% elongation exceeds 3.3 cN/dtex, the monofilament is likely to be scraped with a reed during weaving. The strength at 5% elongation is preferably 2.7 to 3.0 cN/dtex.

When the monofilament according to the present invention contains 0.20 to 0.60 wt% of titanium oxide, in a gray fabric made of the monofilament, it is possible to well suppress scratch fluff defects, that is, defects caused by abrasion of the monofilament with a guide in the warping and weaving process and the consequent scraping of the yarn. When the monofilament contains 0.20 wt% or more of titanium oxide, fine irregularities can be formed on the fiber surface, and the process passability of the monofilament in the warping and weaving process is improved. Therefore, the monofilament surface is prevented from being scraped, and the scratch fluff defects of the resulting gray fabric can be suppressed. The content of titanium oxide is more preferably 0.45 wt% or more. When the content of titanium oxide is 0.60 wt% or less, it is possible to suppress the abrasion damage by the guide in the warping and weaving process, to prevent the monofilament from being scraped by the abrasion damage by the guide, and to suppress the scratch fluff defects in a gray fabric made of the monofilament. The titanium oxide contained in the monofilament preferably has an anatase type crystal form. The average particle size of titanium oxide measured using a laser diffraction/scattering particle size distribution analyzer is preferably 0.6 to 0.8 um. The timing of addition of titanium oxide preferably lies in a period after the end of a transesterification reaction and before the start of a polycondensation reaction.

The monofilament for a filter according to the present invention, when having an intrinsic viscosity (IV) of the yarn of 0.74 or more, can suppress the orientation and crystallization at the fiber surface while maintaining high strength and high modulus, and can suppress scraping of the fiber surface. When the intrinsic viscosity is 1.20 or less, the difference of the fiber orientation between the inner and outer layers is not so large, and the fiber surface is hardly scraped.

A feature of the monofilament according to the present invention is that the polyester used in the monofilament is subjected to solid-phase polymerization to be increased in the IV to 0.97 to 1.50 dL/g, and it is important to suppress degradation of the polymer itself in the solid-phase polymerization. It is preferable that the maximum temperature range in the solid-phase polymerization of the polyester be 200 to 220°C, and that the heating time in the maximum temperature range be 180 to 240 minutes, because the diameter of nodes and the number of nodes can be reduced. Although the mechanism of exhibition of the effect is not clear, it is presumed as follows: since the gel is increased in the diameter from a microgel as a core, reducing the amount of heat received by the polymer during the solid-phase polymerization suppresses the production of a microgel due to degradation of the polymer itself and suppresses the growth of the gel in the subsequent melt spinning, and thus reduces the diameter of nodes and the number of nodes. If the maximum temperature in the solid-phase polymerization is less than 200°C, it is difficult to produce a polyester having a high IV. If the maximum temperature in the solid-phase polymerization exceeds 220°C, the diameter of nodes and the number of nodes increase. Therefore, the maximum temperature in the solid-phase polymerization is more preferably 200 to 210°C. If the heating time in the maximum temperature range is less than 180 minutes, it is difficult to produce a polyester having a high IV. On the other hand, if the heating time in the maximum temperature range exceeds 240 minutes, the diameter of nodes and the number of nodes increase. Therefore, the heating time in the maximum temperature range is more preferably 180 to 200 minutes.

Further, according to the present invention the polyester to be subjected to the solid-phase polymerization contains a divalent metal or a monovalent metal, and the molar ratio of the metal element content M to the phosphorus element content P satisfies a relationship represented by formulae (I) and (II):

$$0.25 \leq M/P \leq 0.85 \quad (I);$$

and

$$M = (M_2 + M_1/2) \quad (II)$$

wherein $M_2$ represents the divalent metal content, and $M_1$ represents the monovalent metal content.

When the molar ratio of the metal element content M to the phosphorus element content P satisfies formula (I), a polyester having a high IV of 0.97 to 1.50 dL/g can be obtained by setting the maximum temperature range in the solid-phase polymerization of the polyester to 200 to 220°C and setting the heating time in the maximum temperature range to 180 to 240 minutes. Although the mechanism of exhibition of the effect is not clear, it is presumed as follows: the metal element in which a phosphorus compound is moderately coordinated acts on a COOH terminal or an OH terminal to reduce the activation energy of the esterification reaction or the de-EG reaction, and thus an increase in the molecular weight of the polyester is easy to proceed. If the molar amount of the phosphorus element is large relative to the molar amount of the metal element, that is, if the value of M/P is small, it is presumed that the activation energy of the solid-phase polymerization reaction cannot be reduced because the catalytic action of the metal element is deactivated. If the molar amount of the phosphorus element is small relative to the molar amount of the metal element, that is, if the value of M/P is large, it is presumed that the reaction speed is lowered because the catalytic action of the metal element is weak. Furthermore, when the molar ratio of the metal element content M to the phosphorus element content P satisfies formula (I), degradation of the polymer itself can be suppressed, and production of the gel that may cause production of nodes can be suppressed. Although the mechanism of exhibition of the effect is not clear, it is presumed as follows: since the catalyst metal is moderately coordinated with the phosphorus compound, the catalytic action of the metal is suppressed, and the contribution of the catalyst metal to the thermal decomposition is suppressed. The value of M/P is preferably 0.25 or more and 0.85 or less, more preferably 0.40 or more and 0.65 or less. From the viewpoint of the catalytic action, the metal element M is preferably selected from the following elements. That is, the divalent metal $M_2$ is preferably selected from Ca, Mg, Mn, and Co, and the monovalent metal $M_1$ is preferably selected from Na, Li, and K. The divalent metal $M_2$ and the monovalent metal $M_1$ used may each be a combination of a plurality of metals. However, it is preferable that the polyester contain at least one divalent metal $M_2$ in order to suppress degradation of the polymer itself.

Examples of the polyester used include aromatic polyesters such as polyethylene terephthalate (PET), polybutylene terephthalate (PBT), and polyethylene naphthalate (PEN), and any of them may be used. Among them, PET is most preferable in terms of operability and cost during the melt spinning.

The polyester used in the present invention may be produced in any apparatus by any technical process as long as the apparatus and the technical process are those commonly used. Although specific examples are given below, the apparatus and the process are not limited to the examples.

The polyester used in the present invention can contain various metal elements such as Ca, Mg, Li, K, Na, Co, Zn, Sn, Ti, Ge, Sb, and Al. The polymerization catalyst preferably contains at least one metal compound selected from Sb, Ti, and Ge. The timing of addition of the polymerization catalyst preferably lies in a period after the end of the esterification reaction and before the start of the transesterification reaction.

In the transesterification reaction method, dimethyl terephthalate and ethylene glycol are charged into a reaction vessel. Adjusting the amount of ethylene glycol charged to 1.7 to 2.3 times by mole of all the dicarboxylic acid components improves the reactivity in the transesterification reaction. These components are melted at 150°C, then manganese acetate and diantimony trioxide are added as catalysts, and the resulting mixture is stirred. Then, methanol is distilled while the temperature is gradually raised to 240°C to perform the transesterification reaction.

After the transesterification reaction, a phosphorus compound is added to deactivate the transesterification catalysts. The phosphorus compound is not particularly limited, and examples of usable phosphorus compounds include phosphoric acids such as phosphoric acid, trimethyl phosphate, triethyl phosphate, trimethyl phosphonoacetate, and dimethyl phenylphosphonate, phosphoric acid esters, phosphorous acid, phosphorous acid esters, and metal salts of these compounds.

Moreover, it is also possible to add various additives, such as additives including matting agents, heat stabilizers, antifoaming agents, orthochromatic agents, flame retardants, antioxidants, ultraviolet absorbers, infrared absorbers, fluorescent brighteners, plasticizers, and impact resistance agents, as well as additives as reinforcing agents including montmorillonite, bentonite, hectorite, plate-like iron oxide, plate-like calcium carbonate, plate-like boehmite, and carbon nanotubes. The timing of addition of the additives preferably lies in a period after the end of the esterification reaction and before the start of the transesterification reaction.

Then, the reaction product is charged into a polymerization apparatus, and the pressure in the polymerization apparatus is gradually reduced from normal pressure to 133 Pa or less while the temperature in the polymerization apparatus is gradually raised to 290°C to distill ethylene glycol. When the predetermined stirring torque is achieved, the reaction is terminated, the inside of the reaction system is brought to normal pressure with nitrogen, and the reaction product is discharged into cold water in a strand form and cut to produce a polyester pellet. Then, the polyester pellet is charged into a solid-phase polymerization apparatus, and heated from normal temperature at a degree of vacuum of 0.30 Torr or less to produce a high IV polyester. From the viewpoint of reducing the amount of heat received by the polymer in the solid-phase polymerization while maintaining the high IV to reduce fine nodes, the maximum temperature range in the solid-phase polymerization is preferably 200 to 220°C, and the heating time in the maximum temperature range is preferably 180 to 240 minutes.

The monofilament according to the present invention is obtained by melt-spinning the above-mentioned polyester into a monofilament using a spinneret by a common method, and then stretching the obtained monofilament. Although it is possible to once wind up the monofilament as an unstretched yarn in the spinning step and then subject the monofilament to the stretching step, it is preferable to perform the stretching in direct continuity with the spinning step.

In direct spinning and stretching, it is preferable to stretch the monofilament in one or more stages using several pairs of heating rolls, and the draw ratio is determined so that the fineness, strength, and strength at 5% elongation each finally fall within a predetermined range. The stretching can include a relaxation treatment such as relaxation stretching, and the relaxation treatment can finely adjust the strength at 5% elongation to fall within a predetermined range.

A filtration layer formed at a position from the inlet of the pack to the discharge port of the spinneret can suppress the discharge of unmelted foreign matters contained in the polymer or a gel resulting from degradation of the polymer itself, or disperse the foreign matters or gel. The filtration layer preferably has a mesh opening amount of about 20 to 30% of the monofilament diameter. If the mesh opening amount is less than 20% of the monofilament diameter, abnormal pressure is applied to the inside of the pack, leading to breakage of parts inside the pack and the pack main body. If the mesh opening amount is 30% or more of the monofilament diameter, unmelted foreign matters and a gel, which are the main cause of nodes in the yarn, are contained in the yarn as coarse particles, leading to production of large nodes or increase in the number of nodes. In addition, introducing, into the filtration layer, a filter obtained by laminating and sintering metal short fibers can finely divide the gel and further reduce the nodes.

As for the degradation of the polymer itself, it is possible to reduce the possibility of production of nodes by reducing the curve of the pipe and reducing the time from melting of the polymer until discharge of the polymer to 20 minutes or less, thereby reducing the amount of heat received by the polymer as much as possible.

EXAMPLES

Hereinafter, the present invention will be described more specifically by way of examples. The metal element content, phosphorus element content, titanium oxide content, quality of nodes of the monofilament, fineness, strength, strength at 5% elongation, intrinsic viscosity, areas of mesh openings, and scratch fluff performance in the examples were measured by the methods described below.

A. Method for measuring metal element content

In concentrated $HNO_3/H_2O_2$, 2 g of a polyester was decomposed at a temperature of 100°C to 160°C, and the resulting liquid was diluted to a certain concentration and measured by ICP-MS. The content of each element was calculated using a detection curve drawn in advance. The measurement accuracy was 0.5 ppm.

B. Method for measuring phosphorus element content and titanium oxide content

A disk-shaped measurement sample was produced from 5 g of a polyester using a hot press apparatus, and the phosphorus element content and titanium oxide content were measured with a fluorescent X-ray elemental analyzer.

C. Quality of nodes of monofilament

(1) To a creel, 24 packages are supplied.
(2) A yarn is unwound at a speed of 750 m/min, and passed through an optical inspection device (PSD-200 manufactured by sensoptic).
(3) The fiber diameter is measured at a yarn length interval of 2.66 m. The measurement is performed for 20 minutes. One measured value that is increased by 2 um or more from the standard fiber diameter is regarded as one node.
(4) After the measurement is completed, the 24 packages supplied to the creel are replaced with different 24 packages.
(5) The procedures in the items (2) to (4) are repeated twice. From the measurement results, the value of the following formula (2) is calculated for nodes having a diameter larger by 2 um or more than the fiber diameter with $x_n$ being the node diameter. The smaller the value of formula (2) is, the higher the quality of nodes is.

[Math. 2]

$$\sum_{n=1}^{k} \left( \frac{x_n - x'}{x'} \right) \times 100 \qquad (2)$$

wherein $x_n$ is the node diameter, x' is the fiber diameter, and k is the number of nodes included in 1.08 million m in the fiber longitudinal direction;

D. Fineness (dtex)

A yarn was wound up into a 500-m skein, and a value obtained by multiplying the mass (g) of the skein by 20 was defined as the fineness.

E. Strength (cN/dtex) and strength at 5% elongation (modulus) (cN/dtex)

The strength and the strength at 5% elongation were measured according to JIS L1013 (1999) using TENSILON UCT-100 manufactured by ORIENTEC CORPORATION.

F. Intrinsic viscosity (IV)

In 10 mL of o-chlorophenol (hereinafter abbreviated as "OCP") having a purity of 98% or more at a temperature of 25°C, 0.8 g of a sample polymer was dissolved. The relative viscosity $\eta r$ of the polymer was determined according to the following formula using an Ostwald viscometer at a temperature of 25°C, and the intrinsic viscosity (IV) of the polymer was calculated.

$$\eta r = \eta/\eta_0 = (t \times d)/(t_0 \times d_0)$$

$$\text{Intrinsic viscosity (IV)} = 0.0242\eta r + 0.2634$$

In the formulae,
$\eta$ is the viscosity of the polymer solution,
$\eta_0$ is the viscosity of OCP,
t is the drop time (sec) of the solution,

$d$ is the density (g/cm$^3$) of the solution,
$t_0$ is the drop time (sec) of OCP, and
$d_0$ is the density (g/cm$^3$) of OCP.

G. Areas of mesh openings

(1) Using the polyester monofilament of each of the examples of the present invention and the comparative examples for both the warp and the weft, the following screen gauze (#300) having a width of 2.2 m and a length of 300 m is woven with a Sulzer loom at a rotation speed of the loom of 200 rpm.

Warp density: 300/2.54 cm
Weft density: 300/2.54 cm

(2) The obtained screen gauze is set on a cloth inspection machine and visually inspected for black streaks. The black streaks look black because they have mesh openings larger than the surrounding openings.
(3) In the black streaks, four sites that look particularly thick are cut out into 50 cm long × 50 cm wide.
(4) The cut pieces of screen gauze are magnified 500 times with an optical microscope. As shown in Fig. 1, areas of four openings A to D are determined, where the opening A is a site where the mesh opening is the largest, and the openings B to D are openings that are surrounded by monofilament yarns (warp) (reference sign 1 in Fig. 1) and monofilament yarns (weft) (reference sign 2 in Fig. 1) and are present on a diagonal line passing over the opening A at an interval of one mesh opening [as for the opening A, the area is determined by the warp interval (reference sign 3 in Fig. 1) × the weft interval (reference sign 4 in Fig. 1)].
(5) The remaining cut pieces of screen gauze are measured in the same manner.
(6) The average, maximum value, minimum value, and difference (maximum value - minimum value) of the measured areas of mesh openings are obtained. The higher the quality of nodes of the monofilament is, the smaller the difference (maximum value - minimum value) is.

H. Scratch fluff performance

(1) A polyester monofilament is fixed with a guide at a tension of 7.8 g.
(2) A reed dent (made of stainless steel, 0.15-mm thick) is placed against the yarn perpendicularly, and rubbed against the yarn in a range of 8.2 cm at a frequency of 672 times/min in a reciprocating manner.
(3) The number of times of rubbing until the yarn breaks is counted. The larger the number of times until the yarn breaks is, the less likely the scratch fluff is to occur during weaving.
(4) The procedures in the items (1) to (3) are repeated four times, and the average number of times until the yarn breaks is determined.

(Example 1)

Into a transesterification reactor, 100 wt% of dimethyl terephthalate, 58 wt% of ethylene glycol (1.9 times by mole of the dicarboxylic acid component), 0.017 wt% of cobalt acetate tetrahydrate, and 0.03 wt% of diantimony trioxide were charged, and the contents were dissolved at 150°C. Methanol was distilled while the dissolved product was heated to 240°C over 3 hours. When the predetermined methanol was distilled, the transesterification reaction was terminated. To the reaction product after the termination of the transesterification reaction, a mixture of 0.50 wt% of titanium oxide/0.012 wt% of phosphoric acid/1.6 wt% of ethylene glycol was added, and the resulting mixture was transferred to a polymerization apparatus. The pressure in the polymerization apparatus was gradually reduced from normal pressure to vacuum while the temperature in the polymerization apparatus was raised from 235°C to 300°C over 120 minutes to distill ethylene glycol. When the melt viscosity reached a viscosity corresponding to an intrinsic viscosity of 0.78, the reaction was terminated. The inside of the reaction system was brought to normal pressure with a nitrogen gas, and the reaction product was discharged into cold water in a strand form from the bottom of the polymerization apparatus and cut to produce a polyester resin composition pellet. The polyester resin composition pellet had a limiting viscosity of 0.78. The chip was predried at a degree of vacuum of 0.20 Torr at a temperature less than 200°C, and then subjected to solid-phase polymerization at the same degree of vacuum at 200 to 205°C for 191 minutes to produce a polyester resin chip having an intrinsic viscosity of 1.01.

The used polyester resin chip having an intrinsic viscosity of 1.01 was melted at a temperature of 295°C and poured into a publicly known spinneret. A yarn discharged from the spinneret had an intrinsic viscosity of 0.76. The polyester monofilament yarn discharged from the spinneret was taken up on an unheated first godet roll at a speed of 1000 m/min with a spinning oil being applied to the yarn. The polyester monofilament yarn without being wound up once was subjected to stretching and heat setting by being wound on a first hot roll heated to a temperature of 90°C at a speed of 1010 m/min, a second hot roll heated to a temperature of 90°C at a speed of 3077 m/min, and a third hot roll heated to a temperature of 130°C at a speed of 3659 m/min. Then, the polyester monofilament yarn was wound on two unheated godet rolls each controlled to have a surface temperature of 30°C at a speed of 3649 m/min, and then wound up with the spindle rotation speed being controlled so that the winding tension would be 0.3 cN/dtex to produce a polyester monofilament having a fineness of 4.0 dtex. The properties of the polyester monofilament are as shown in Table 1. The polyester monofilament had a small fineness, high strength, high modulus, and excellent quality of nodes, and had high scratch fluff performance. A high-mesh screen gauze obtained using the monofilament also had high uniformity of areas of mesh openings.

(Examples 2 and 3; and Reference Examples 4 and 5)

A polyester monofilament having a fineness of 6.0 to 13.0 dtex and having high strength and high modulus was obtained using the polyester of Example 1 and changing the amount of discharge and the draw ratio. In all the cases, the monofilament had high quality of nodes and high scratch fluff performance, and a gray fabric obtained using the monofilament also had high uniformity of areas of mesh openings.

[Table 1]

| Examples 4 and 5 are Reference Examples. | | | | | | | | |
|---|---|---|---|---|---|---|---|---|
| [Table 1] | | | | | | | | |
| | | | Unit | Example 1 | Example 2 | Example 3 | Example 4 | Example 5 |
| Conditions of solid-phase polymerization | Maximum temperature | | °C | 205 | 205 | 205 | 205 | 205 |
| | Heating time in maximum temperature range | | min | 191 | 191 | 191 | 191 | 191 |
| Polymer | IV of polyester | | dL/g | 1.01 | 1.01 | 1.01 | 1.01 | 1.01 |
| | Monovalent metal element content | | ppm | 0 | 0 | 0 | 0 | 0 |
| | Divalent metal element content | | ppm | Co: 34 | Co:34 | Co:34 | Co: 34 | Co: 34 |
| | Phosphorus element content | | ppm | 33 | 33 | 33 | 33 | 33 |
| | Metal element content $M (M_2 + M_1/2)$ | | mol | 0.58 | 0.58 | 0.58 | 0.58 | 0.58 |
| | Phosphorus element content P | | mol | 1.07 | 1.07 | 1.07 | 1.07 | 1.07 |
| | M/P | | - | 0.54 | 0.54 | 0.54 | 0.54 | 0.54 |

(continued)

| Examples 4 and 5 are Reference Examples. | | | | | | | |
|---|---|---|---|---|---|---|---|
| [Table 1] | | | | | | | |
| | | Unit | Example 1 | Example 2 | Example 3 | Example 4 | Example 5 |
| Monofilament | Draw ratio | times | 3.61 | 3.63 | 3.67 | 3.70 | 3.75 |
| | IV of yarn | dL/g | 0.76 | 0.78 | 0.82 | 0.84 | 0.87 |
| | Fineness | dtex | 4.0 | 6.0 | 8.0 | 10.0 | 13.0 |
| | Strength | cN/dtex | 5.1 | 5.3 | 5.5 | 5.8 | 6.1 |
| | Strength at 5% elongation | cN/dtex | 2.7 | 2.8 | 2.8 | 3.0 | 3.2 |
| | Quality of nodes Left-hand side of formula (1) | % | 7455 | 6191 | 4002 | 2391 | 2050 |
| | Crystal form of titanium oxide ($TiO_2$) | Type | Anatase | Anatase | Anatase | Anatase | Anatase |
| | Content of titanium oxide ($TiO_2$) | wt% | 0.50 | 0.50 | 0.50 | 0.50 | 0.50 |
| Areas of mesh openings | Average value | $\mu m^2$ | 3437 | 3930 | 3990 | 4024 | 4620 |
| | Maximum value | $\mu m^2$ | 3697 | 4140 | 4100 | 4078 | 4670 |
| | Minimum value | $\mu m^2$ | 3091 | 3637 | 3838 | 3949 | 4550 |
| | Difference (maximum value - minimum value) | $\mu m^2$ | 606 | 503 | 261 | 128 | 120 |
| Scratch fluff performance | Number of times of rubbing until yarn breaks | times | 20670 | 30738 | 41300 | 51700 | 67200 |

(Examples 6 to 10 and Comparative Examples 1 and 2)

A monofilament was obtained in the same manner as in Example 2 except that the addition amount of the used catalyst for the polyester, the type of the catalyst, and the addition amount of the phosphorus element were changed in Example 2 from those in Example 1. The properties of the polyester monofilament are shown in Table 2. In Example 9, a monofilament was obtained in the same manner as in Example 2 except that 0.007 wt% of sodium hydrogen phosphate was added simultaneously with phosphoric acid. In Example 10, a monofilament was obtained in the same manner as in Example 2 except that 0.012 wt% of manganese acetate tetrahydrate was added instead of cobalt acetate tetrahydrate, and that the addition amount of phosphoric acid was changed from 0.012 wt% to 0.013 wt%. In Comparative Example 2, a monofilament was obtained in the same manner as in Example 2 except that the addition amount of cobalt acetate tetrahydrate was changed from 0.017 wt% to 0.013 wt%, that 0.06 wt% of calcium acetate monohydrate was simultaneously added, and that the addition amount of phosphoric acid was changed from 0.012 wt% to 0.013 wt%.

[Table 2]

| [Table 2] | | Unit | Example 6 | Example 7 | Example 8 | Example 9 | Comparative Example 1 | Example 10 | Comparative Example 2 |
|---|---|---|---|---|---|---|---|---|---|
| Conditions of solid-phase polymerization | Maximum temperature | °C | 205 | 205 | 205 | 205 | 205 | 205 | 205 |
| | Heating time in maximum temperature range | min | 191 | 191 | 191 | 191 | 191 | 191 | 191 |
| Polymer | IV of polyester | dL/g | 1.00 | 0.98 | 0.98 | 1.01 | 0.92 | 1.00 | 0.92 |
| | Monovalent metal element content | ppm | 0 | 0 | 0 | Na:16 | 0 | 0 | 0 |
| | Divalent metal element content | ppm | Co:40 | Co: 54 | Co: 35 | Co:35 | Co:11 | Mn:30 | Co:27 Ca:90 |
| | Phosphorus element content | ppm | 33 | 34 | 70 | 54 | 34 | 38 | 40 |
| | Metal element content M ($M_2 + M_{1/2}$) | mol | 0.68 | 0.92 | 0.59 | 0.94 | 0.19 | 0.55 | 2.70 |
| | Phosphorus element content P | mol | 1.07 | 1.10 | 2.26 | 1.74 | 1.10 | 1.23 | 1.29 |
| | M/P | | 0.64 | 0.83 | 0.26 | 0.54 | 0.17 | 0.45 | 2.09 |
| Monofilament | Draw ratio | times | 3.63 | 3.63 | 3.63 | 3.63 | 3.63 | 3.63 | 3.63 |
| | IV of yarn | dL/g | 0.78 | 0.77 | 0.77 | 0.78 | 0.72 | 0.78 | 0.72 |
| | Fineness | dtex | 6.0 | 6.0 | 6.0 | 6.0 | 6.0 | 6.0 | 6.0 |
| | Strength | cN/dtex | 5.3 | 5.2 | 5.2 | 5.3 | 4.9 | 5.3 | 4.9 |
| | Strength at 5% elongation | cN/dtex | 2.8 | 2.7 | 2.7 | 2.8 | 2.5 | 2.8 | 2.5 |
| | Quality of nodes Left-hand side of formula (1) | % | 6997 | 9837 | 8236 | 4789 | 12573 | 6224 | 34235 |
| | Crystal form of titanium oxide ($TiO_2$) | Type | Anatase | Anatase | Anatase | Anatase | Anatase | Anatase | Anatase |
| | Content of titanium oxide ($TiO_2$) | wt% | 0.50 | 0.50 | 0.50 | 0.50 | 0.50 | 0.50 | 0.50 |

(continued)

[Table 2]

| | | Unit | Example 6 | Example 7 | Example 8 | Example 9 | Comparative Example 1 | Example 10 | Comparative Example 2 |
|---|---|---|---|---|---|---|---|---|---|
| Areas of mesh openings | Average value | $\mu m^2$ | 3903 | 3789 | 3857 | 3971 | 3245 | 3929 | 4096 |
| | Maximum value | $\mu m^2$ | 4158 | 4233 | 4189 | 4113 | 3803 | 4141 | 6953 |
| | Minimum value | $\mu m^2$ | 3549 | 3174 | 3397 | 3773 | 2241 | 3634 | 263 |
| | Difference (maximum value - minimum value) | $\mu m^2$ | 609 | 1059 | 791 | 340 | 1561 | 507 | 6690 |
| Scratch fluff performance | Number of times of rubbing until yarn breaks | times | 31000 | 31000 | 31000 | 31000 | 31000 | 31000 | 31000 |

(Examples 11 to 14)

A polyester monofilament was obtained in the same manner as in Example 2 except that the addition amount of titanium oxide in Example 2 was changed. The properties of the polyester monofilament are shown in Table 3.

(Examples 15 and 16 and Comparative Examples 3 and 4)

A monofilament was obtained in the same manner as in Example 2 except that the maximum temperature in the solid-phase polymerization in Example 2 was changed. The properties of the polyester monofilament are shown in Table 3.

(Examples 17 and 18 and Comparative Examples 5 and 6)

A monofilament was obtained in the same manner as in Example 2 except that the heating time in the maximum temperature range in the solid-phase polymerization in Example 2 was changed. The properties of the polyester monofilament are shown in Table 3.

[Table 3-1]

| | | Unit | Example 11 | Example 12 | Example 13 | Example 14 | Example 15 | Example 16 |
|---|---|---|---|---|---|---|---|---|
| Conditions of solid-phase polymerization | Maximum temperature | °C | 205 | 205 | 205 | 205 | 208 | 219 |
| | Heating time in maximum temperature range | min | 191 | 191 | 191 | 191 | 191 | 191 |
| Polymer | IV of polyester | dL/g | 1.01 | 1.01 | 1.01 | 1.01 | 1.02 | 1.17 |
| | Monovalent metal element content | ppm | 0 | 0 | 0 | 0 | 0 | 0 |
| | Divalent metal element content | ppm | Co:34 | Co:34 | Co:34 | Co:34 | Co:34 | Co:34 |
| | Phosphorus element content | ppm | 33 | 33 | 33 | 33 | 33 | 33 |
| | Metal element content M ($M_2 + M_1/2$) | mol | 0.58 | 0.58 | 0.58 | 0.58 | 0.58 | 0.58 |
| | Phosphorus element content P | mol | 1.07 | 1.07 | 1.07 | 1.07 | 1.07 | 1.07 |
| | M/P | - | 0.54 | 0.54 | 0.54 | 0.54 | 0.54 | 0.54 |
| Monofilament | Draw ratio | times | 3.63 | 3.63 | 3.63 | 3.63 | 3.63 | 3.63 |
| | IV of yarn | dL/g | 0.78 | 0.78 | 0.78 | 0.78 | 0.78 | 0.95 |
| | Fineness | dtex | 6.0 | 6.0 | 6.0 | 6.0 | 6.0 | 6.0 |
| | Strength | cN/dtex | 5.3 | 5.3 | 5.3 | 5.3 | 5.3 | 5.4 |
| | Strength at 5% elongation | cN/dtex | 2.8 | 2.8 | 2.8 | 2.8 | 2.8 | 3.0 |
| | Quality of nodes Left-hand side of formula (1) | % | 6422 | 5923 | 6021 | 6021 | 6834 | 8217 |
| | Crystal form of titanium oxide ($TiO_2$) | Type | Anatase | Anatase | Anatase | Anatase | Anatase | Anatase |
| | Content of titanium oxide ($TiO_2$) | wt% | 0.20 | 0.60 | 0.10 | 0.80 | 0.50 | 0.50 |

14

(continued)

| [Table 3-1] | | Unit | Example 11 | Example 12 | Example 13 | Example 14 | Example 15 | Example 16 |
|---|---|---|---|---|---|---|---|---|
| Areas of mesh openings | Average value | $\mu m^2$ | 3922 | 3938 | 3935 | 3905 | 3908 | 3970 |
| | Maximum value | $\mu m^2$ | 4145 | 4135 | 4137 | 3912 | 4154 | 4455 |
| | Minimum value | $\mu m^2$ | 3613 | 3665 | 3655 | 3369 | 3567 | 3606 |
| | Difference (maximum value - minimum value) | $\mu m^2$ | 532 | 469 | 482 | 543 | 587 | 849 |
| Scratch fluff performance | Number of times of rubbing until yarn breaks | times | 30000 | 31900 | 18900 | 20000 | 31000 | 31000 |

[Table 3-2]

| [Table 3-2] | | Unit | Comparative Example 3 | Comparative Example 4 | Example 17 | Example 18 | Comparative Example 5 | Comparative Example 6 |
|---|---|---|---|---|---|---|---|---|
| Conditions of solid-phase polymerization | Maximum temperature | °C | 190 | 247 | 205 | 206 | 205 | 205 |
| | Heating time in maximum temperature range | min | 191 | 191 | 200 | 235 | 160 | 300 |
| Polymer | IV of polyester | dL/g | 0.83 | 1.51 | 1.02 | 1.05 | 0.93 | 1.11 |
| | Monovalent metal element content | ppm | 0 | 0 | 0 | 0 | 0 | 0 |
| | Divalent metal element content | ppm | Co:34 | Co: 34 | Co:34 | Co:34 | Co:34 | Co:34 |
| | Phosphorus element content | ppm | 33 | 33 | 33 | 33 | 33 | 33 |
| | Metal element content M $(M_2 + M_1/2)$ | mol | 0.58 | 0.58 | 0.58 | 0.58 | 0.58 | 0.58 |
| | Phosphorus element content P | mol | 1.07 | 1.07 | 1.07 | 1.07 | 1.07 | 1.07 |
| | M/P | - | 0.54 | 0.54 | 0.54 | 0.54 | 0.54 | 0.54 |

(continued)

[Table 3-2]

| | | Unit | Comparative Example 3 | Comparative Example 4 | Example 17 | Example 18 | Comparative Example 5 | Comparative Example 6 |
|---|---|---|---|---|---|---|---|---|
| Monofilament | Draw ratio | times | 3.63 | 3.63 | 3.63 | 3.63 | 3.63 | 3.63 |
| | IV of yarn | dL/g | 0.61 | 1.24 | 0.78 | 0.82 | 0.72 | 0.91 |
| | Fineness | dtex | 6.0 | 6.0 | 6.0 | 6.0 | 6.0 | 6.0 |
| | Strength | cN/dtex | 4.8 | 5.9 | 5.3 | 5.4 | 4.9 | 5.9 |
| | Strength at 5% elongation | cN/dtex | 2.2 | 3.4 | 2.8 | 2.9 | 2.5 | 3.0 |
| | Quality of nodes Left-hand side of formula (1) | % | 6057 | 12573 | 6951 | 8443 | 5691 | 11080 |
| | Crystal form of titanium oxide ($TiO_2$) | Type | Anatase | Anatase | Anatase | Anatase | Anatase | Anatase |
| | Content of titanium oxide ($TiO_2$) | wt% | 0.50 | 0.50 | 0.50 | 0.50 | 0.50 | 0.50 |
| Areas of mesh openings | Average value | $\mu m^2$ | 2634 | 3573 | 3904 | 3849 | 3174 | 3889 |
| | Maximum value | $\mu m^2$ | 2770 | 4381 | 4157 | 4194 | 3216 | 4558 |
| | Minimum value | $\mu m^2$ | 2445 | 3042 | 3554 | 3370 | 3115 | 2697 |
| | Difference (maximum value - minimum value) | $\mu m^2$ | 325 | 1338 | 603 | 824 | 101 | 1861 |
| Scratch fluff performance | Number of times of rubbing until yarn breaks | times | 31000 | 21000 | 31000 | 31000 | 31000 | 31000 |

DESCRIPTION OF REFERENCE SIGNS

1: Monofilament (warp)
2: Monofilament (weft)
3: Warp interval
4: Weft interval
A to D: Area of opening

**Claims**

1. A single component polyester monofilament for a superfine high-mesh filter, the single component polyester monofilament satisfying conditions A to D shown below:

A. as for nodes having a diameter larger by 2 $\mu$m or more than a fiber diameter, the nodes being present in 1 million m in a fiber longitudinal direction of the single component polyester monofilament, a total (%) of increase rates of the diameters from the fiber diameter satisfies formula (1):
[Math. 1]

$$\sum_{n=1}^{k}\left(\frac{x_n - x'}{x'}\right) \times 100 \leq 10000 \qquad (1)$$

wherein $X_n$ is a node diameter, $x'$ is the fiber diameter, and $k$ is number of nodes included in 1 million m in the fiber longitudinal direction;
B. the single component polyester monofilament has a fineness of 3.0 to 8.0 dtex;
C. the single component polyester monofilament has a strength of 5.0 to 6.5 cN/dtex;
D. the single component polyester monofilament has a strength at 5% elongation of 2.7 to 3.3 cN/dtex, the strength and the strength at 5% elongation being measured according to JIS L1013 (1999), and
E. a molar ratio of a divalent or monovalent metal element content M to a phosphorus element content P in the single component polyester monofilament satisfies a relationship represented by formulae (I) and (II):

$$0.25 \leq M/P \leq 0.85 \quad (I);$$

and

$$M = (M_2 + M_1/2) \quad (II)$$

wherein $M_2$ represents a divalent metal content, and $M_1$ represents a monovalent metal content, the metal element content and the phosphorus element content being measured as defined in the description.

2. The single component polyester monofilament for a superfine high-mesh filter according to claim 1, comprising 0.20 to 0.60 wt% of titanium oxide.

3. A method for producing a single component polyester monofilament for a superfine high-mesh filter, the method comprising subjecting a polyester to solid-phase polymerization, and then melt-spinning the polyester to produce a monofilament,

in the production, a molar ratio of a divalent or monovalent metal element content M to a phosphorus element content P in the polyester to be subjected to the solid-phase polymerization satisfying a relationship represented by formulae (I) and (II):

$$0.25 \leq M/P \leq 0.85 \quad (I);$$

and

$$M = (M_2 + M_1/2) \quad (II)$$

wherein $M_2$ represents a divalent metal content, and $M_1$ represents a monovalent metal content, the metal element content and the phosphorus element content being measured as defined in the description,
a maximum temperature range in the solid-phase polymerization being a temperature range of 200 to 220°C, and a heating time in the maximum temperature range being 180 to 240 minutes, and
the single component polyester monofilament satisfying conditions A to D shown below:

A. as for nodes having a diameter larger by 2 μm or more than a fiber diameter, the nodes being present in 1 million m in a fiber longitudinal direction of the single component polyester monofilament, a total (%) of increase rates of the diameters from the fiber diameter satisfies formula (1):

[Math. 1]

$$\sum_{n=1}^{k} \left( \frac{x_n - x'}{x'} \right) \times 100 \leq 10000 \quad (1)$$

wherein $X_n$ is a node diameter, x' is the fiber diameter, and k is number of nodes included in 1 million m in the fiber longitudinal direction;
B. the single component polyester monofilament has a fineness of 3.0 to 8.0 dtex;
C. the single component polyester monofilament has a strength of 5.0 to 6.5 cN/dtex; and
D. the single component polyester monofilament has a strength at 5% elongation of 2.7 to 3.3 cN/dtex,
the strength and the strength at 5% elongation being measured according to JIS L1013 (1999).

**Patentansprüche**

1. Einkomponentiges Polyester-Monofilament für ein superfeines hochmaschiges Filter, wobei das einkomponentige Polyester-Monofilament die folgenden Bedingungen A bis D erfüllt:

A. für Knoten mit einem Durchmesser, der um 2 μm oder mehr größer als ein Faserdurchmesser ist, wobei die Knoten mit 1 Million m in einer Faserlängsrichtung des einkomponentigen Polyester-Monofilaments vorhanden sind, erfüllt die Summe (%) der Vergrößerungsraten der Durchmesser von dem Faserdurchmesser die Formel (1):
[Formel 1]

$$\sum_{n=1}^{k} \left( \frac{x_n - x'}{x'} \right) \times 100 \leq 10000 \quad (1)$$

wobei $X_n$ der Knotendurchmesser ist, x' der Faserdurchmesser ist und k die Anzahl von Knoten in 1 Million m in der Faserlängsrichtung ist,
B. das einkomponentige Polyester-Monofilament weist eine Feinheit von 3,0 bis 8,0 dtex auf,
C. das einkomponentige Polyester-Monofilament weist eine Festigkeit von 5,0 bis 6,5 cN/dtex auf,
D. das einkomponentige Polyester-Monofilament weist eine Festigkeit bei einer 5-prozentigen Dehnung von 2,7 bis 3,3 cN/dtex auf,
wobei die Festigkeit und die Festigkeit bei einer 5-prozentigen Dehnung gemäß JIS L1013 (1999) gemessen werden, und
E. das Molverhältnis eines divalenten oder monovalenten Metallelementanteils M zu einem Phosphorelementanteil P in dem einkomponentigen Polyester-Monofilament erfüllt eine durch die Formeln (I) und (II) ausgedrückte Beziehung:

$$0,25 \leq M/P \leq 0,85 \quad (I),$$

und

$$M = (M_2 + M_1/2) \qquad (II)$$

wobei $M_2$ einen divalenten Metallanteil wiedergibt und $M_1$ einen monovalenten Metallanteil wiedergibt, wobei der Metallelementanteil und der Phosphorelementanteil wie in der Beschreibung definiert gemessen werden.

2.  Einkomponentiges Polyester-Monofilament für ein superfeines hochmaschiges Filter nach Anspruch 1, das 0,20 bis 0,60 Gewicht-% Titanoxid umfasst.

3.  Verfahren zum Produzieren eines einkomponentigen Polyester-Monofilaments für ein superfeines hochmaschiges Filter, wobei das Verfahren das Unterwerfen eines Polyesters an eine Festphasen-Polymerisation und dann das Schmelzspinnen des Polyesters für das Erzeugen eines Monofilaments umfasst,

wobei während der Produktion das Molverhältnis eines divalenten oder monovalenten Metallelementanteils M zu einem Phosphorelementanteil P in dem der Festphasen-Polymerisation zu unterwerfenden Polyester die durch die Formeln (I) und (II) wiedergegebene Beziehung erfüllt:

$$0{,}25 \le M/P \le 0{,}85 \qquad (I),$$

und

$$M = (M_2 + M_1/2) \qquad (II)$$

wobei $M_2$ einen divalenten Metallanteil wiedergibt und $M_1$ einen monovalenten Metallanteil wiedergibt, wobei der Metallelementanteil und der Phosphorelementanteil wie in der Beschreibung definiert gemessen werden, wobei ein maximaler Temperaturbereich in der Festphasen-Polymerisation ein Temperaturbereich von 200 bis 220°C ist, wobei die Heizzeit in dem maximalen Temperaturbereich 180 bis 240 Minuten beträgt, und wobei das einkomponentige Polyester-Monofilament die folgenden Bedingungen A bis D erfüllt:

A. für Knoten mit einem Durchmesser, der um 2 $\mu$m oder mehr größer als ein Faserdurchmesser ist, wobei die Knoten mit 1 Million m in einer Faserlängsrichtung des einkomponentigen Polyester-Monofilaments vorhanden sind, erfüllt die Summe (%) der Vergrößerungsraten der Durchmesser von dem Faserdurchmesser die Formel (1):
[Formel 1]

$$\sum_{n=1}^{k}\left(\frac{x_n - x'}{x'}\right) \times 100 \ \le \ 10000 \qquad (1)$$

wobei $X_n$ der Knotendurchmesser ist, x' der Faserdurchmesser ist und k die Anzahl von Knoten in 1 Million m in der Faserlängsrichtung ist,
B. das einkomponentige Polyester-Monofilament weist eine Feinheit von 3,0 bis 8,0 dtex auf,
C. das einkomponentige Polyester-Monofilament weist eine Festigkeit von 5,0 bis 6,5 cN/dtex auf, und
D. das einkomponentige Polyester-Monofilament weist eine Festigkeit bei einer 5-prozentigen Dehnung von 2,7 bis 3,3 cN/dtex auf,
wobei die Festigkeit und die Festigkeit bei einer 5-prozentigen Dehnung gemäß JIS L1013 (1999) gemessen werden.

**Revendications**

1.  Monofilament de polyester monocomposant pour un filtre à haute densité de maille superfine, le monofilament de polyester monocomposant satisfaisant aux conditions A à D indiquées ci-dessous :

A. en ce qui concerne les noeuds ayant un diamètre supérieur de 2 $\mu$m ou plus à un diamètre de la fibre, les noeuds étant présents dans 1 million de m dans une direction longitudinale de la fibre du monofilament de polyester monocomposant, un total (%) des taux d'augmentation des diamètres par rapport au diamètre de la fibre satisfait à la formule (1) :

[Formule math. 1]

$$\sum_{n=1}^{k}(\frac{x_n - x'}{x'}) \times 100 \quad \leq \quad 10000 \qquad (1)$$

où $X_n$ est un diamètre de noeud, x' est le diamètre de la fibre et k est le nombre de noeuds compris dans 1 million de m dans la direction longitudinale de la fibre ;

B. le monofilament de polyester monocomposant a une finesse de 3,0 à 8,0 dtex ;

C. le monofilament de polyester monocomposant a une résistance de 5,0 à 6,5 cN/dtex ;

D. le monofilament de polyester monocomposant a une résistance à un allongement de 5 % de 2,7 à 3,3 cN/dtex, la résistance et la résistance à un allongement de 5 % étant mesurées conformément à la norme JIS L1013 (1999), et

E. un rapport molaire entre une teneur en éléments métalliques divalents ou monovalents M et une teneur en élément phosphoré P dans le monofilament de polyester monocomposant satisfait à une relation représentée par les formules (I) et (II) :

$$0,25 \leq M/P \leq 0,85 \ (I) \ ;$$

et

$$M = (M_2 + M_1/2) \ (II)$$

où $M_2$ représente une teneur en métaux divalents et $M_1$ représente une teneur en métaux monovalents, la teneur en éléments métalliques et la teneur en élément phosphoré étant mesurées comme défini dans la description.

2. Monofilament de polyester monocomposant pour filtre à haute densité de maille superfine selon la revendication 1, comprenant de 0,20 à 0,60 % en poids d'oxyde de titane.

3. Procédé de production d'un monofilament de polyester monocomposant pour un filtre à haute densité de maille superfine, le procédé comprenant la soumission d'un polyester à une polymérisation en phase solide, puis le filage à l'état fondu du polyester pour produire un monofilament,

dans la production, un rapport molaire entre une teneur en éléments métalliques divalents ou monovalents M et une teneur en élément phosphoré P dans le polyester devant être soumis à la polymérisation en phase solide satisfaisant à une relation représentée par les formules (I) et (II) :

$$0,25 \leq M/P \leq 0,85 \ (I) \ ;$$

et

$$M = (M_2 + M_1/2) \ (II)$$

où $M_2$ représente une teneur en métaux divalents et $M_1$ représente une teneur en métaux monovalents, la teneur en éléments métalliques et la teneur en élément phosphoré étant mesurées comme défini dans la description,

une plage de température maximale dans la polymérisation en phase solide étant une plage de température de 200 à 220 °C, et

une durée de chauffage dans la plage de température maximale étant de 180 à 240 minutes, et le monofilament de polyester monocomposant satisfaisant aux conditions A à D indiquées ci-dessous :

A. en ce qui concerne les noeuds ayant un diamètre supérieur de 2 μm ou plus à un diamètre de la fibre, les noeuds étant présents dans 1 million de m dans une direction longitudinale de la fibre du monofilament de polyester monocomposant, un total (%) des taux d'augmentation des diamètres par rapport au diamètre de la fibre satisfait à la formule (1) :
[Formule math. 1]

$$\sum_{n=1}^{k}\left(\frac{x_n - x'}{x'}\right) \times 100 \ \leq \ 10000 \qquad (1)$$

où $X_n$ est un diamètre de noeud, x' est le diamètre de la fibre et k est le nombre de noeuds compris dans 1 million de m dans la direction longitudinale de la fibre ;
B. le monofilament de polyester monocomposant a une finesse de 3,0 à 8,0 dtex ;
C. le monofilament de polyester monocomposant a une résistance de 5,0 à 6,5 cN/dtex ; et
D. le monofilament de polyester monocomposant a une résistance à un allongement de 5 % de 2,7 à 3,3 cN/dtex,
la résistance et la résistance à un allongement de 5 % étant mesurées conformément à la norme JIS L1013 (1999).

# Figure 1

EP 3 677 709 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013194330 A
- JP 2008101288 A
- JP 20080501 A
- JP 5217059 B
- JP 2012117196 A
- JP 2014118574 A